# EUROPEAN PATENT SPECIFICATION

(11) **EP 1 712 098 B1**
(45) Date of publication and mention of the grant of the patent: **15.04.2009**
(21) Application number: 04707264.0
(22) Date of filing: 02.02.2004
(51) Int. Cl.: G06F 15/78

(54) **METHOD AND DEVICE FOR ENSURING THE OPERATING STATE OF A MOBILE ELECTRONIC TERMINAL DEVICE**
VERFAHREN UND EINRICHTUNG ZUR SICHERSTELLUNG DES BETRIEBSZUSTANDS EINES MOBILEN ELEKTRONISCHEN ENDGERÄTS
PROCEDE ET DISPOSITIF ASSURANT L'ETAT DE FONCTIONNEMENT D'UN DISPOSITIF DE TERMINAL ELECTRONIQUE MOBILE

(43) Date of publication of application: 18.10.2006
(73) Proprietor: Nokia Corporation, 02150 Espoo (FI)
(72) Inventor: NEVALAINEN, Mikko, 44628 Herne (DE); SCHNEIDER, Gregor, 44787 Bochum (DE); FÄRNEMYHR, Rickard, FIN-33560 Tampere (SE)
(74) Representative: Becker Kurig Straus
(86) International application number: PCT/IB2004/000238
(87) International publication number: WO 2005/084051

(56) References cited:
- EP-A1- 0 992 916
- US-A- 5 812 870
- US-A1- 2001 006 902
- US-A1- 2003 105 948
- US-A1- 2004 018 851

## Description

The present invention relates to a method and a device for ensuring the operating state of an electronic device when connecting or disconnecting removable storage media. It also relates to removing storage media from an electronic device without the need to power down the device or perform an eject procedure, especially in combination with read-only (ROM) media, while providing protection against software failures that may occur upon removal of the storage medium. The invention particularly relates to the removal of memory cards from mobile electronic terminal devices.

In the use of removable storage media with computer systems, there has always been the necessity to transparently handle the removal of a medium from a running system. It could cause severe problems if some program running on the system was still trying to access data stored on the medium after it has been removed. This in turn could lead to the program or even the complete operation system crashing. If a program is run directly from the medium, it is common to load portions of the program into the main memory of the computer, while loading needed additional portions off the medium only when necessary. In such a configuration the running program will very probably crash or at least behave incorrectly after unclean removal of the respective storage medium.

To prevent such events when using electronic devices, certain techniques have been formerly used. As with floppy disks and the like, which typically use a purely mechanical release mechanism, the use of LEDs indicating read/write activity has been common. While this may prevent data loss, it cannot provide protection of unexpected accesses to a removed medium, which can still cause severe problems in the stability of the operation system.

Storage media like CD/DVD-ROM and the like usually have an electrically driven tray. It is relatively easy to lock this tray while the medium is still in use. Only after the medium has been cleanly logged off the system, the tray may be opened to remove it. The risk of crashes is thus eliminated. This is a satisfactory but inconvenient solution for such hardware configurations.

The above mentioned media or the corresponding reader device could be damaged or even destroyed (file system corruption) when being improperly removed. Thus the formerly known solutions to prevent that, only aim at protecting the hardware, while not taking care of software or system crashes because of a medium that cannot be accessed anymore.

With devices such as USB storage sticks and the like, the so-called "hot-swapping" capability, i.e. the possibility of removing or inserting a medium while the corresponding device is active, is a common feature. Especially in combination with the hot-swap capability it is inconvenient for the user not to be able to remove a medium without the need to care for the software stability of his electronic device.

US 6,405,362 B1 discloses a system and method for automatic installation of a piece of software or software program and releasing resources used by the software stored on a compact flash memory card, upon insertion into or removal from a computer system, respectively. A so-called autorun program is stored on the card, which is called upon insertion to install the specific software, and called again using a clean-up parameter to release the resources used by the software upon removal. This method relies on a so-called event monitor, which detects insertion or removal of the card, and searches for and starts the autorun program if a card is inserted or removed. Therefore the autorun program has to be contained in specific directories on every memory card.

Especially portable electronic terminal devices with their usually restricted amount of memory strongly rely on removable storage media. Also the reduced size usually does not allow to have a mechanical or even electrical eject mechanism. Examples for such devices are mobile phones, mobile gaming consoles, portable music or video players and the like. Being forced to power down the device prior to a change of the memory card or using a special eject procedure causes inconveniences for the user. Software crashes resulting from hot-swapping of a memory card are even more annoying.

Thus it is clear that there is a need for transparently handling insertion or connection and particularly removal or disconnection of removable storage media, i.e. a method and a device maintaining the operating state of the software environment of an electronic device, while at the same time not requiring the user to perform inconvenient additional steps prior to removal of a medium.

It is therefore an object of the present invention to provide a method and a device for hot-swapping of removable storage media in electronic devices, while ensuring the operating state of the electronic device.

According to a first aspect of the present invention a method for ensuring the operating state of a mobile electronic terminal device is provided. The mobile electronic terminal device comprises an interface for connecting with a removable storage medium and contains a directory of programs essential for the operation of the mobile electronic terminal device. The method comprises the steps of detecting if the status of the interface has changed, comparing programs currently running on the mobile electronic terminal device with programs contained in the directory of the essential programs, and terminating all currently running programs which are not contained in the directory of the essential programs. By terminating all programs not strictly essential for the functionality of the device it is prevented that those programs will behave incorrectly or even cause software crashes upon disconnection of a storage medium like a memory card. Especially programs running from a memory card are likely to cause problems when trying to access a removed card. Hence, it is advantageous to terminate all programs not necessary for important functions of the device. This will ensure the operating state of the device by keeping only those programs running that will behave correctly even if a memory card is unexpectedly removed. Also it is thus possible to provide a clean and predefined state of the device prior to insertion of another card. Using a directory to indicate which programs are essential offers great flexibility in deciding which programs are to be kept running.

It is preferred, that a status change of the interface indicates that a removable storage medium has been connected with the interface. This allows to decide which further steps are appropriate according to the kind of status change.

It is preferred, that a status change of the interface indicates that a removable storage medium has been disconnected from the interface. This allows to decide which further steps are appropriate according to the kind of status change.

It is preferred, that the step of detecting, if the status of the interface has changed, is followed by determining which programs currently running on the mobile electronic terminal device are independent of data stored on the removable storage medium, and adding the independent programs to the directory of the essential programs. Running programs that are independent can so be kept running.

It is preferred, that the mobile electronic terminal device contains a restart directory. Further steps to be performed are determining which of the programs that are not contained in the directory of essential programs are restartable without accessing the removable storage medium. Those restartable programs are added to the restart directory. This allows to restart those programs.

It is preferred, that all programs in the restart directory are restarted. The same programs that were running before performing the method will thus be also running thereafter, to improve comfort for the user.

It is preferred, that the interface is queried to detect if the status of the interface has changed. Therefore no changes have to be made to a corresponding memory card.

It is preferred, that the querying is constantly repeated every n seconds. So the time interval for querying can be adjusted to the specific needs.

It is preferred, that the querying is paused when the mobile electronic terminal device is in a power saving state. As querying consumes processing power and thus adds to the total power consumption of the device, querying should be interrupted during sleep cycles.

It is preferred, that a signal is received to detect if the status of the interface has changed. This allows to use an external trigger mechanism to signal a status change of the interface. For example a hardware interrupt e.g. triggered by a lid mechanism for a memory card can be used for this. Or the memory card controller may serve to generate an interrupt upon a status change. If such an interrupt is utilized for detection, it may replace the aforementioned polling mechanism, as it will not be necessary then.

According to a second aspect of the invention a software tool is provided, comprising program code means stored on a computer readable medium for carrying out the inventive method when the software tool is run on a computer or network device.

According to a third aspect of the invention a computer program product is provided, comprising program code means stored on a computer readable medium for carrying out the inventive method when the program product is run on a computer or network device.

According to a fourth aspect of the invention a computer program product comprising program code, downloadable from a server for carrying out the inventive method when the program product is run on a computer or network device.

According to a fifth aspect of the invention a computer data signal embodied in a carrier wave and representing a program that instructs a computer to perform the steps of the method of anyone of the preceding method claims.

According to a sixth aspect of the present invention a mobile electronic terminal device is provided. The device comprises an interface component for connecting with a removable storage medium, a data processing component, and a storage component. The storage component is adapted to store directories of programs, and the interface component is adapted to enable the data processing component to access the removable storage medium. The storage component comprises a directory of programs essential for the operation of the mobile electronic terminal device, and the data processing component comprises a detecting component, a comparing component and a terminating component. The detecting component is adapted to detect status changes of the interface component, the comparing component is adapted to compare programs currently running on the mobile electronic terminal device with programs contained in the directory of the essential programs, and the terminating component is adapted to terminate programs currently running on the mobile electronic terminal device that are not contained in the directory of essential programs. Such a device offers the possibility to terminate all programs not strictly essential for the functionality of the device. Thus it is prevented that those programs will behave incorrectly or even cause software crashes upon disconnection of a storage medium like a memory card. As especially programs running from a memory card are likely to cause problems when trying to access a removed card it is advantageous to terminate all programs not necessary for important functions of the device. This will ensure the operating state of the device by keeping only those programs running that will behave correctly even if a memory card is unexpectedly removed. Using a directory to indicate which programs are essential offers great flexibility to the manufacturer in deciding which programs are to be kept running depending on the kind of device and the programs provided by the device.

It is preferred that the inventive device further comprises a determining component and an adding component. The determining component is adapted to determine, which programs are independent of accessing the removable storage medium, and the adding component is adapted to add the independent programs to the directory of essential programs. This allows to prevent programs to be terminated that will not pose problems after a memory card has been removed. Such programs that are run from e memory card, but are loaded completely into the main memory of the device, will then be able to run until the device is powered down.

It is preferred that the determining component is adapted to determine which currently running programs that are not contained in the directory of essential programs can be restarted without accessing the removable storage medium, that the adding component is adapted to generate a directory containing the programs that can be restarted, and that the terminating component is adapted to restart the programs contained in the directory of programs that can be restarted. This allows to restart certain programs that will be terminated, to improve comfort for the user who is not required to restart them manually.

It is preferred that the interface component further comprises a trigger component adapted to generate a signal when the status of the interface component changes. That way no continuous querying of the interface status is necessary. Such a trigger component may be a switch located on a lid of the memory card slot, or it may be part of the memory card controller.

It is preferred that the signal indicates that a removable storage medium has been connected with the interface. Thus the device is enabled to take appropriate steps depending on that event.

It is preferred that the signal indicates that a removable storage medium has been disconnected from the interface. Thus the device is enabled to take appropriate steps depending on that event.

It is preferred that the interface component comprises a status indicator adapted to indicate read or write accesses to the removable storage medium. Indicating read and particularly write accesses can help a user to determine when it is best to remove a memory card or wait until accesses have been finished.

It is preferred that the mobile electronic terminal device is a mobile phone. Especially the operation of mobile phones can be very important for the user.

It is preferred that the mobile electronic terminal device is a gaming console. Since changing a memory card will occur more frequently with such devices, the present invention is particularly useful here.

With the above methods and devices according to the invention the technical consequences of removal of media components can be minimized thereby maintaining the operating state of the mobile device as much untroubled as possible.
Fig. 1 shows a flow diagram of a method according to an embodiment of the present invention;
Fig. 2 shows a flow diagram of a method according to a preferred embodiment of the present invention;
Fig. 3 shows another illustration of a method according to a preferred embodiment of the present invention;
Fig. 4 shows a schematic illustration of a device according to an embodiment of the present invention; and
Fig. 5 shows a schematic illustration of a device according to a preferred embodiment of the present invention.

While in the following description the term "memory card" will be used, it should be understood that such memory cards are but typical examples of removable storage media. Also there exists a number of different types of memory cards, like multi media cards (MMC), compact flash (CF) and secure digital (SD) memory cards. The invention is not restricted to a use of so-called memory cards or a specific type of memory card, but may be used with all kinds of removable storage media. Further, while the following description will be focused to examples of mobile phones and mobile gaming consoles (i.e. mobile electronic terminal devices), it should be understood that the invention is not restricted thereto, but may be used with all electronic devices utilizing removable storage media. The present invention is especially aimed at read-only (ROM) memory cards, as those can be removed at any time without the risk of file system corruption or the like. That advantage would be eliminated if additional eject procedures had to be performed prior to removal. Depending on the hardware implementation read-write memory cards may still require certain eject procedures to avoid damaging them, or at least the user would have to wait until write accesses are finished, before he could remove the card.

In the present invention programs running on the electronic device are separated into two main categories. The category referred to as "essential programs" contains only programs that are programs essential for the operation of the electronic device, i.e. such that are performing essential device functions. In the case of mobile phones, examples for such programs may be an SMS application, an auto-lock program (engaging the key-lock after a period without user interaction), a screensaver, the phone application (responsible for handling calls) and of course the central system application or operating system itself (responsible for display light etc.), i.e. all applications running on the electronic device that are required for proper operation of the device. In a simple case these may be all programs that can be run on the device without an additional storage medium, also referred to as "built-in programs". The essential programs may also exclude some built-in applications not strictly necessary for normal operation, like a WAP browser, a multimedia player or the like.

The second category will be referred to as "non-essential programs". In a simple case these include any applications not built-in, in other words applications that are loaded from a removable storage medium. But this category may also include the above mentioned built-in programs that are not necessary for the basic functionality of the device.

The non-essential programs are such programs that may be terminated without affecting the functionality or operation of the electronic device, whereas the essential programs provide required functionality and must therefore be kept running. For example, if the electronic device is a mobile phone, programs like games, a stop-watch, a calendar or a data bank and almost all programs running from an external memory card will belong to the non-essential programs.

The method of the present invention is particularly useful when applied to mobile gaming consoles similar to the Nokia® N-Gage. As each game usually resides on its own memory card, changing these cards will occur more frequently in such electronic devices than in mobile phones or the like. An advantage of the present invention is that it also provides a clean environment after a memory card has been removed, so that another game started from another card is presented a clean system. Since the processing performance and main memory of such mobile gaming consoles are still rather restricted, it is important not to waste resources like internal memory capacity and processing power. With the inventive method the game can utilize the full performance of the device to give the best gaming experience to the user. After removal of a memory card all non-essential programs are terminated, so that no system resources are wasted. Another advantage is, that for the next memory card not only a clean system, but also a predefined software environment with only a few known programs running can be provided, as there will usually only be programs running that are built-in and are thus well known to the manufacturer of the electronic device. This will effectively prevent possible software conflicts and facilitate the development of games.

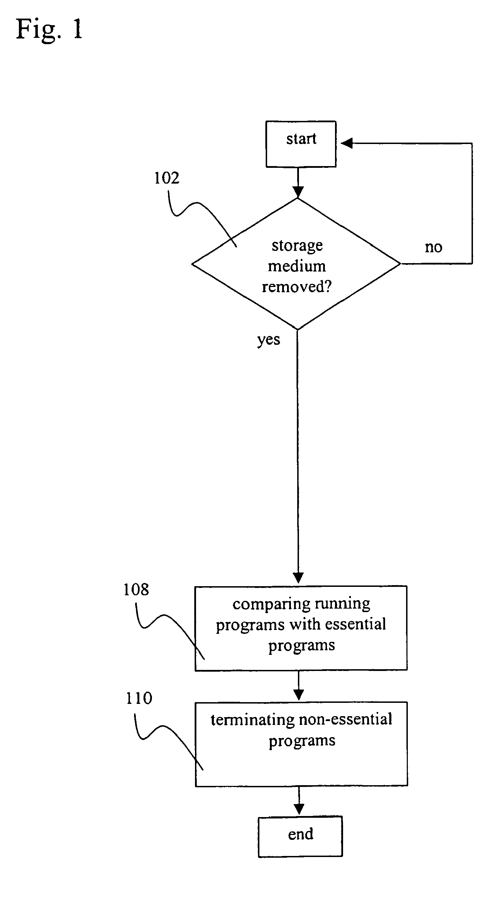

In fig. 1 an operation cycle according to an embodiment of the present invention is illustrated. It is assumed that an electronic device is activated, and a memory card is connected with the device, and there is a number of programs currently running on the device. In step 102 it is determined if the memory card has been removed. If not, the cycle returns to start and continues until a removal occurs. If a removal has been detected, in step 108 the currently running programs are compared with the programs in the essential programs directory. Subsequent to that all non-essential programs are terminated (step 110), and the cycle ends. A common way will be to build a directory of currently running programs when needed, to compare that directory with the essential programs directory. While using directories is a straightforward and easy to implement way (if not already implemented in the device), there may be situations in which a "step by step" method could be better adapted. That would mean to check every running program one by one against the essential programs, and terminate it, if it is no essential program. The electronic device has now reached a clean status, only essential programs are running on the device, and no programs that will try to access the removed memory card.

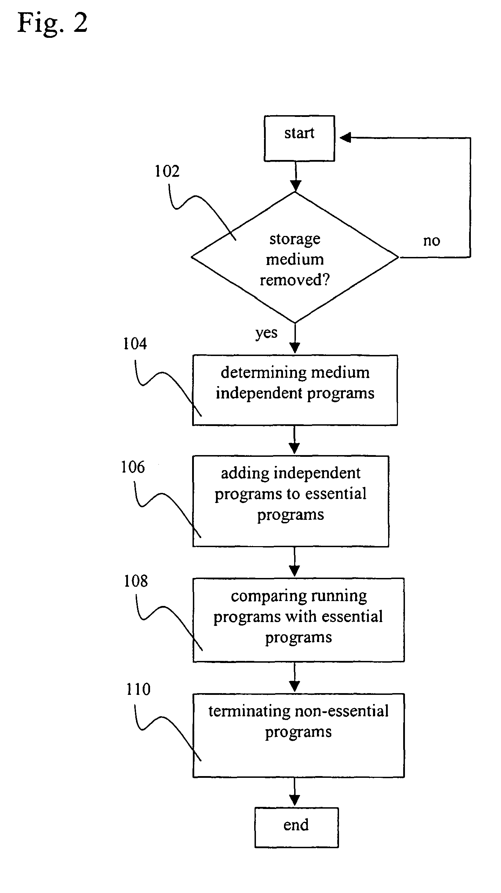

In fig. 2 a preferred embodiment of the present invention is shown. Subsequent to step 102 as in fig. 1 it is determined, in step 104, which currently programs are independent of the storage medium. Independent means, that they do not depend on accessing the memory card, to load additional program code for example. Thus such programs will be able to keep running without the card being connected. These independent programs are added to the essential programs directory (step 106). The cycle is then continued with steps 108 and 110 as depicted in fig. 1.

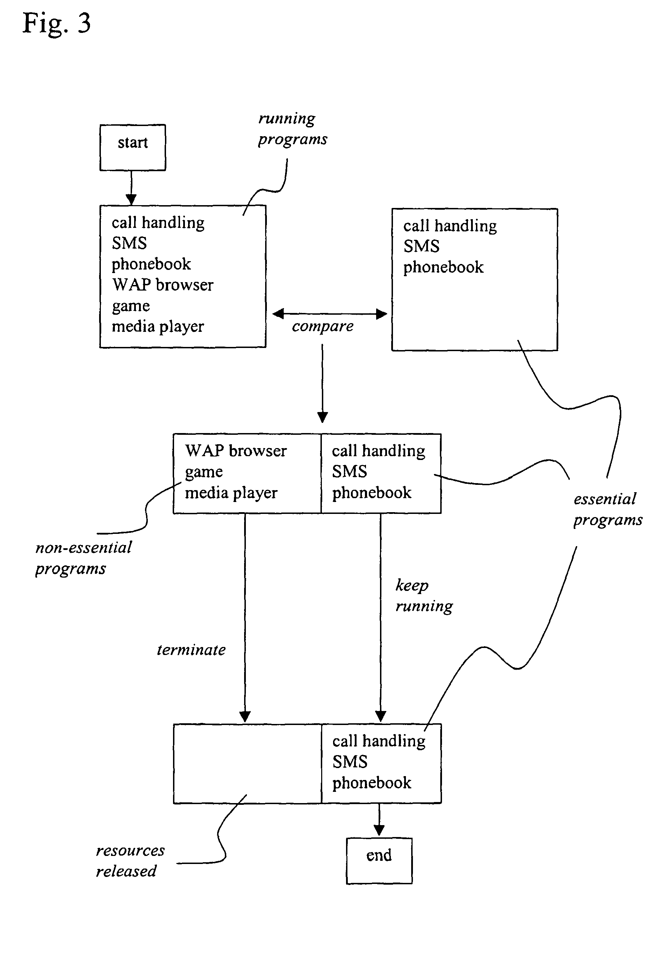

In fig. 3 an embodiment of the inventive method is shown schematically. Here it is assumed that there are a couple of programs currently running on an electronic device, in the depicted example of fig. 3 call handling or phone application, SMS, phonebook applications, a WAP browser, a game and a media player. Upon removal of a memory card from the electronic device the illustrated procedure is performed. A directory of currently running programs is compared with a directory of essential programs stored in the device. By performing this step the directory of running programs is separated into the two sections designated as "essential programs" and "non-essential programs". The essential programs are kept running, whereas all non-essential programs are terminated. Thus the state of the electronic device after performing the inventive procedure is such that all programs corresponding to essential device functions are still running, while all non-essential programs have been terminated. System resources, mainly main memory but also CPU processing time, have been released. The system is in a clean and predefined state now.

Using the example embodiment of the invention shown in fig. 3 an additional possible feature of the invention may be described. In fig. 3 there are 3 non-essential programs running, that is WAP browser, game and media player. The WAP browser will in most cases be a built-in functionality of the electronic device. The game program will usually be run from an inserted memory card. A media player may either be built-in or run from the memory card. In another possible embodiment of the invention an additional category of programs is used. That is, programs that are not essential for the main functionality of the electronic device, but are, however, built-in into the electronic device. It may be advantageous to restart such programs after the removal procedure has been completed, to improve comfort for the user, such programs could be the WAP browser and possibly the media player. This may prevent failures of such programs if they are still trying to access files stored on the already removed memory card. Because they will be restarted afterwards, though, the user will not be confused about programs that have been terminated he expects to be still running.

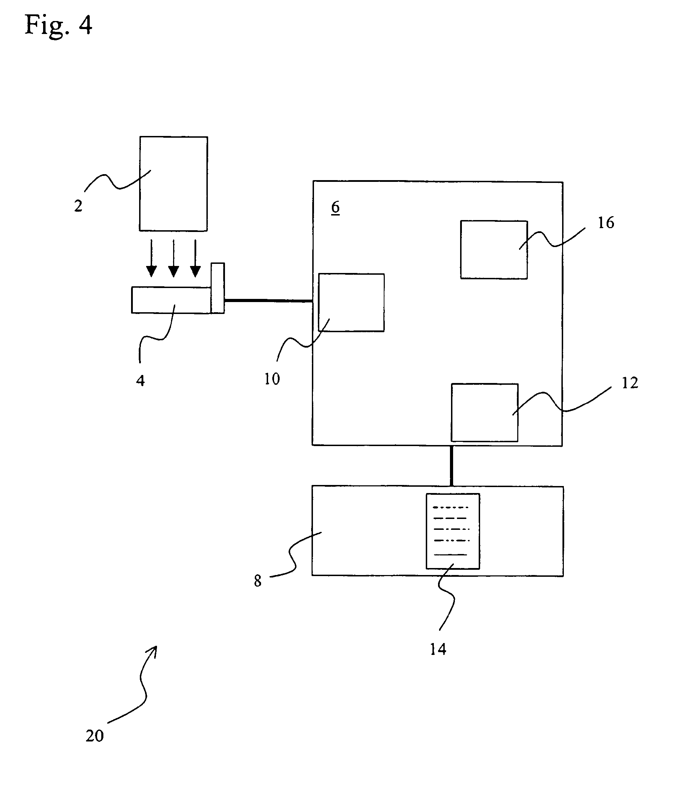

In fig. 4 a device in accordance with the invention is schematically illustrated. The inventive mobile electronic terminal device 20 comprises an interface component 4, a data processing component 6 and a storage component 8, wherein all these components are connected. The interface component 4 is adapted to connect to a memory card 2. Such an interface component will usually be some kind of slot for receiving a memory card. It may additionally be equipped with a lid covering the slot and thus the card. The storage component 8 contains a directory 14 of programs essential for the operation of the electronic device. The data processing component 6 comprises a determining component 10, a comparing component 12 and a terminating component 16. The determining component 10 serves to detect changes of the status of the interface component 4, i.e. if a memory card 2 has been connected or disconnected. That can for example be performed by comparing a previous state with the current state. A simple method to achieve that would be to regularly query or poll the interface component, e.g. try to read a certain register of a memory card. If no card is connected, the register is unreadable, and upon insertion of a memory card it becomes readable, or vice versa in case a memory card is disconnected. Or a signal from a trigger mechanism (not shown) can be received to detect status changes. The comparing component 12 is able to compare programs in the directory 14 of essential programs with the programs that are currently running on the electronic device. Thus it can determine those programs that are non-essential, to enable the terminating component 16 to terminate non-essential programs.

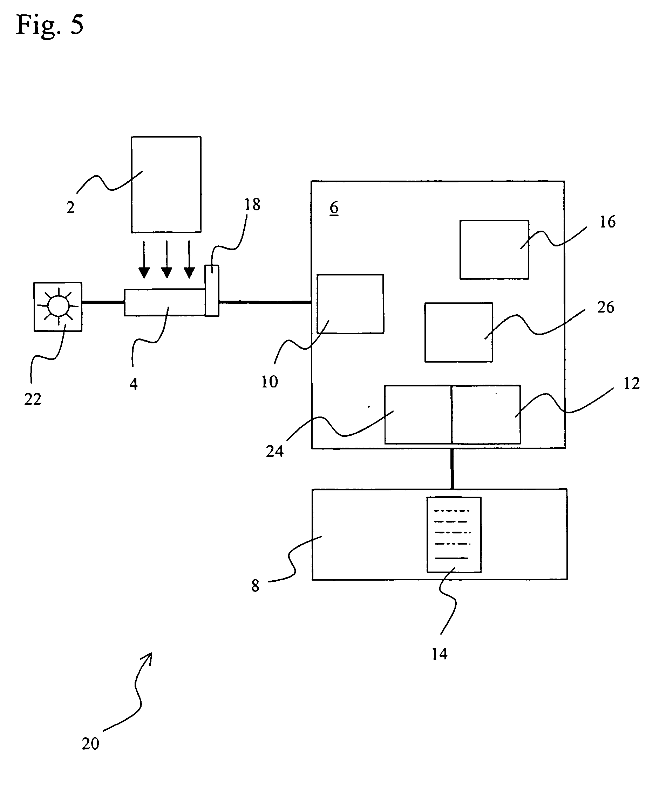

In fig. 5 a preferred embodiment of an inventive device is shown. The device contains the components already described together with fig. 1, and additional components that are optional in embodiments of the invention. The interface component 4 may be equipped with a trigger component 18, for example incorporated into a lid of the memory card slot. The trigger component generates a corresponding signal, when a memory card 2 is either connected to or disconnected from the interface component 4. The inventive device may comprise further optional components: a status indicator 22 for indicating read/write accesses to the memory card 2, a determining component 26 and an adding component 24. The status indicator 22 can be a simple LED or a signal generator enabling the electronic device to display read/write activity, in case of a mobile phone on its display for example. Using a status indicator, especially for indicating write accesses, offers the possibility to encourage the user not to remove a memory card when a write access takes place. Such behavior will help to avoid file system corruption caused by interrupted write accesses. The determining component 26 serves to determine, which programs currently running do not depend on access to the memory card, thereby enabling the adding component 24 to add those programs to the directory 14 of essential programs. Thus they can be kept running. These can be programs that were run from the memory card, but are now independent of the card, i.e. because they were loaded completely into the main memory of the electronic device. The adding component 24 adds such programs to the essential programs directory 14, i.e. it is adapted to write into the directory stored in the storage component 8. Thus it can be prevented that programs that are independent of the memory card 2 will be also terminated. On the one hand this means improved comfort for the user, while on the other hand it keeps resources of the electronic device occupied. The determining component 26 can further serve to determine, which currently running programs, that are not in the essential programs directory 14, can be restarted without accessing the memory card. Such programs, though maybe accessing data on the memory card, can be restarted even after the memory card has been removed, by loading their program code from an internal storage of the electronic device, a ROM for example. Restarting them gives additional comfort to the user, because such programs will be running after the inventive procedure has been completed. Restartable programs can of course only be built-in programs. In an embodiment utilizing this restart feature, the terminating component 16 is adapted not only to terminate non-essential, but also to restart the restartable programs.

The required detection of a status change of the interface to the memory card, i.e. insertion or removal of a particular card, may be achieved in different ways. A straightforward approach would be to regularly query or poll the card. That could be done by reading a certain register being present on the card, or a card-specific ID, and notifying if the content of the register or the card ID changes or is not accessible anymore, because the card has been removed. Insertion can be detected analogously. The time interval for polling the card status may be adjusted for satisfying both usability and minimized resource utilization. On the one hand the polling cycle has to be as short as to prevent read/write accesses to the memory card after it has been removed, to provide maximum software stability. On the other hand it is desirable to keep the cycle as long as possible, to minimize power consumption and utilization of processing time of the CPU of the electronic device. Polling may easily be implemented in software, or integrated in the memory card interface (access controller hardware). To minimize power consumption it should be ensured that polling is only performed when the electronic terminal is in an active state. Thus, if it is in a power saving state (sleep cycle), e.g. if a screensaver is running, polling should be paused.

Another way of notifying card status changes could be using an event that is triggered when a card is removed or inserted. For that purpose a hardware trigger device could be used, e.g. some kind of switch being activated when inserting/removing a card. If the electronic device uses a lid to hide or protect the card slot, such a switch may be integrated in this lid mechanism. This way of detecting card status changes does not use any system resources and causes no additional power consumption. Also the removal is substantially instantaneously detected. But it is not as easy to implement because of the required hardware changes to the device.

It should be noted that the inventive method, though being particularly useful and being described with respect to a removal of a memory card, may as well be applied to the insertion of a card. It may be advantageous to perform a clean-up procedure similar to the removal method of the invention prior to inserting a memory card, for example to provide the above mentioned predefined system status. If the user has started some (non-essential) programs before inserting the next memory card, it can be advantageous to clean up the system with the inventive method to provide the above mentioned clean, predetermined system status. This is especially useful in cases where the memory card to be inserted contains a game. Additionally a file system read may be triggered when inserting a memory card.

While the inventive method aims at enabling the user to remove a memory card whenever he/she likes, it can though be useful to include an activity indicator. For example read/write accesses to the memory card can be displayed on a display of the electronic device, or indicated by a status LED. This enables the user to avoid removing the card when write accesses are not yet finished, to prevent possible file system corruption with read-write media.

The method according to the invention is especially useful when prior known media eject functions (safe removal) shall be avoided, to improve usage comfort. However, it can be combined with such media eject functions. If the user performs the eject function it may occur that the user does not wait for the eject function to indicate that a removal is now safe. In such cases, or when there are programs that the eject function or program cannot terminate, so that the eject fails to release the medium in an appropriate time, the present invention can ensure a clean and operational system, when a medium is removed without waiting for the eject function to finish.

The aforementioned prior art method of using a certain "autorun" program stored on the memory card to handle necessary actions upon insertion or removal of the card has many disadvantages. Each memory card must be provided with such a program, in a compatible way, i.e. for example being stored in the same predefined directory on each card. It has to be loaded into the main memory of the device, otherwise the clean-up procedure to be performed upon removal of the card could not be performed if the card was unproperly removed before the procedure was completed. So this prior art method wastes additional main memory of the device. It requires changes to both the content of the card and the software of the electronic device, to ensure that the autorun program is called when necessary.

The present invention utilizes a method and a device for hot-swapping of removable storage media that is robust, easy to implement, does not require changes to existing memory cards and little or no modifications to existing applications related to a refresh of the memory card state, even if they are using the memory card. The present invention can be used regardless of the specific type of memory card, and provides additional aforementioned advantages over the prior art.

## Claims

1. Method for ensuring the operating state of a mobile electronic terminal device (20), said mobile electronic terminal device (20) comprising an interface (4) for connecting with a removable storage medium (2) and containing a directory (14) of programs essential for the operation of said mobile electronic terminal device (20), the method comprising:
- detecting if the status of said interface has changed (102);
- comparing (108) programs currently running on said mobile electronic terminal device (20) with programs contained in said directory (14) of said essential programs; and
- terminating (110) all currently running programs which are not contained in said directory (14) of said essential programs.

2. Method according to claim 1, wherein a status change of said interface (4) indicates that a removable storage medium (2) has been connected with said interface (4).

3. Method according to claim 1, wherein a status change of said interface (4) indicates that a removable storage medium (2) has been disconnected from said interface (4).

4. Method according to claim 3, wherein the step of detecting, if the status of said interface (4) has changed, is followed by:
- determining (104) which programs currently running on said mobile electronic terminal device (20) are independent of data stored on said removable storage medium (2); and
- adding (106) said independent programs to said directory (14) of said essential programs.

5. Method according to claims 3 or 4, wherein said mobile electronic terminal device (20) contains a restart directory, and the steps in claim 4 are followed by:
- determining which of said programs that are not contained in said directory (14) of essential programs are restartable without accessing said removable storage medium (2); and
- adding said restartable programs to said restart directory.

6. Method according to claim 5, further comprising:
- restarting all programs in said restart directory.

7. Method according to anyone of the preceding claims, wherein said interface (4) is queried to detect if the status of said interface (4) has changed.

8. Method according to claim 7, wherein said querying is constantly repeated every n seconds.

9. Method according to claim 7 or 8, wherein said querying is paused when said mobile electronic terminal device (20) is in a power saving state.

10. Method according to anyone of the preceding claims, wherein a signal is received to detect if the status of said interface (4) has changed.

11. Software tool comprising program code means stored on a computer readable medium for carrying out the method of anyone of the preceding claims when said software tool is run on a computer or network device.

12. Computer program product comprising program code means stored on a computer readable medium for carrying out the method of anyone of the preceding method claims when said program product is run on a computer or network device.

13. Computer program product comprising program code, downloadable from a server for carrying out the method of anyone of the preceding method claims when said program product is run on a computer or network device.

14. Computer data signal embodied in a carrier wave and representing a program that instructs a computer to perform the steps of the method of anyone of the preceding method claims.

15. Mobile electronic terminal device (20), comprising:
- an interface component (4) for connecting with a removable storage medium (2);
- a data processing component (6); and
- a storage component (8),
wherein said storage component (8) is adapted to store directories (14) of programs, and said interface component (4) is adapted to enable said data processing component (6) to access said removable storage medium (2), **characterized in that**
said storage component (8) comprises a directory (14) of programs essential for the operation of said mobile electronic terminal device (20), and said data processing component (6) comprises a detecting component (10), a comparing component (12) and a terminating component (16), wherein said detecting component (10) is adapted to detect status changes of said interface component (4), said comparing component (12) is adapted to compare programs currently running on said mobile electronic terminal device (20) with programs contained in said directory (14) of said essential programs, and said terminating component (16) is adapted to terminate programs currently running on said mobile electronic terminal device (20) that are not contained in said directory (14) of said essential programs.

16. Device according to claim 15, further comprising a determining component (26) and an adding component (24), wherein said determining component (26) is adapted to determine, which programs are independent of accessing said removable storage medium (2), and said adding component (24) is adapted to add said independent programs to said directory (14) of said essential programs.

17. Device according to claim 16, wherein said determining component (26) is adapted to determine which currently running programs that are not contained in said directory (14) of essential programs can be restarted without accessing said removable storage medium (2), said adding component (24) is adapted to generate a directory containing said programs that can be restarted, and said terminating component (16) is adapted to restart said programs contained in said directory of programs that can be restarted.

18. Device according to anyone of claims 15 to 17, wherein said interface component (4) further comprises a trigger component (18) adapted to generate a signal when the status of said interface component (4) changes.

19. Device according to claim 18, wherein said signal indicates that a removable storage medium (2) has been connected with said interface (4).

20. Device according to claim 18, wherein said signal indicates that a removable storage medium (2) has been disconnected from said interface (4).

21. Device according to anyone of claims 15 to 20, wherein said interface component (4) comprises a status indicator (22) adapted to indicate read or write accesses to said removable storage medium (2).

22. Device according to anyone of claims 15 to 21, wherein said mobile electronic terminal device (20) is a mobile phone.

23. Device according to anyone of claims 15 to 22, wherein said mobile electronic terminal device (20) is a gaming console.

## Patentansprüche

1. Verfahren für das Gewährleisten des Betriebszustandes eines mobilen elektronischen Endgeräts (20), wobei das mobile elektronische Endgerät (20) eine Schnittstelle (4) für ein Verbinden mit einem entfernbaren Speichermedium (2) umfasst und ein Verzeichnis (14) von Programmen enthält, die für den Betrieb dieses mobilen elektronischen Endgeräts (20) wesentlich sind, umfassend:
- Erfassen ob sich der Status der Schnittstelle geändert hat (102);
- Vergleichen (108) von Programmen, die aktuell auf dem mobilen elektronischen Endgerät (20) laufen, mit Programmen, die in dem Verzeichnis (14) der wesentlichen Programme enthalten sind; und
- Beenden (110) aller aktuell laufenden Programme, die nicht in dem Verzeichnis (14) der wesentlichen Programme enthalten sind.

2. Verfahren nach Anspruch 1, wobei eine Statusänderung der Schnittstelle (4) angibt, dass ein entfernbares Speichermedium (2) mit der Schnittstelle (4) verbunden worden ist.

3. Verfahren nach Anspruch 1, wobei eine Statusänderung der Schnittstelle (4) angibt, dass ein entfernbares Speichermedium (2) von der Schnittstelle (4) getrennt wurde.

4. Verfahren nach Anspruch 3, wobei auf den Schritt der Erfassung, ob sich der Status der Schnittstelle (4) geändert hat, folgendes folgt:
- Bestimmen (104), welche Programme, die aktuell auf dem mobilen elektronischen Endgerät (20) laufen, unabhängig sind von Daten, die auf dem entfernbaren Speichermedium (2) gespeichert sind; und
- Hinzufügen (106) dieser unabhängigen Programme zum Verzeichnis (14) der wesentlichen Programme.

5. Verfahren nach Anspruch 3 oder 4, wobei das mobile elektronischen Endgerät (20) ein Wiederanlaufverzeichnis enthält, und auf die Schritte in Anspruch 4 folgendes folgt:
- Bestimmen, welche der Programme, die nicht im Verzeichnis (14) der wesentlichen Programme enthalten sind, wiederanlauffähig sind, ohne auf das entfernbare Speichermedium (2) zuzugreifen; und
- Hinzufügen der wiederanlauffähigen Programme zum Wiederanlaufverzeichnis.

6. Verfahren nach Anspruch 5, weiter umfassend:
- Wiederanlaufenlassen aller Programme in dem Wiederanlaufverzeichnis.

7. Verfahren nach einem der vorhergehenden Ansprüche, wobei die Schnittstelle (4) abgefragt wird, um zu erfassen, ob sich der Status der Schnittstelle (4) geändert hat.

8. Verfahren nach Anspruch 7, wobei das Abfragen alle n Sekunden konstant wiederholt wird.

9. Verfahren nach Anspruch 7 oder 8, wobei das Abfragen unterbrochen wird, wenn sich das mobile elektronische Endgerät (20) in einem Energiesparzustand befindet.

10. Verfahren nach einem der vorherigen Ansprüche, wobei ein Signal empfangen wird, um zu erfassen, ob sich der Zustand der Schnittstelle (4) geändert hat.

11. Softwarewerkzeug, das Programmkodemittel umfasst, die auf einem von einem Computer lesbaren Medium gespeichert sind, für das Ausführen des Verfahrens einer der vorhergehenden Ansprüche, wenn das Softwarewerkzeug auf einem Computer oder einer Netzvorrichtung zum Ablauf gebracht wird.

12. Computerprogrammprodukt, das Programmkodemittel umfasst, die auf einem von einem Computer lesbaren Medium gespeichert sind, für das Ausführen des Verfahrens einer der vorhergehenden Verfahrensansprüche, wenn das Programmprodukt auf einem Computer oder einer Netzvorrichtung zum Ablauf gebracht wird.

13. Computerprogrammprodukt, das Programmkode umfasst, der von einem Server herabladbar ist, für das Ausführen des Verfahrens einer der vorhergehenden Verfahrensansprüche, wenn das Programmprodukt auf einem Computer oder einer Netzvorrichtung zum Ablauf gebracht wird.

14. Computerdatensignal, das in einer Trägerwelle enthalten ist und ein Programm darstellt, das einen Computer anweist, die Schritte des Verfahrens einer der vorhergehenden Verfahrensansprüche auszuführen.

15. Mobiles elektronisches Endgerät (20), umfassend:
- eine Schnittstellenkomponente (4) für ein Verbinden mit einem entfernbaren Speichermedium (2);
- eine Datenverarbeitungskomponente (6); und
- eine Speicherkomponente (8),
wobei die Speicherkomponente (8) ausgelegt ist, um Verzeichnisse (14) von Programmen zu speichern, und die Schnittstellenkomponente (4) ausgelegt ist, um es der Datenverarbeitungskomponente (6) zu ermöglichen, auf das entfernbare Speichermedium (2) zuzugreifen,
**dadurch gekennzeichnet, dass**
die Speicherkomponente (8) ein Verzeichnis (14) von Programmen umfasst, die für den Betrieb des mobilen elektronischen Endgeräts (20) wesentlich sind, und dass die Datenverarbeitungskomponente (6) eine Erfassungskomponente (10), eine Vergleichskomponente (12) und eine Beendigungskomponente (16) umfasst, wobei die Erfassungskomponente (10) ausgelegt ist, Statusänderungen der Schnittstellenkomponente (4) zu erfassen, die Vergleichskomponente (12) ausgelegt ist, um Programme, die aktuell auf dem mobilen elektronischen Endgerät (20) laufen, mit Programmen, die in dem Verzeichnis (14) der wesentlichen Programme enthalten sind, zu vergleichen, und die Beendigungskomponente (16) ausgelegt ist, um Programme zu beenden, die aktuell auf dem mobilen elektronischen Endgerät (20) laufen, die nicht im Verzeichnis (14) der wesentlichen Programme enthalten sind.

16. Vorrichtung nach Anspruch 15, weiter umfassend eine Bestimmungskomponente (26) und eine Hinzufügungskomponente (24), wobei die Bestimmungskomponente (26) ausgelegt ist, zu bestimmen, welche Programme unabhängig von einem Zugreifen auf das entfernbare Speichermedium (2) sind, und die Hinzufügungskomponente (24) ausgelegt ist, die unabhängigen Programme zum Verzeichnis (14) der wesentlichen Programme hinzuzufügen.

17. Vorrichtung nach Anspruch 16, wobei die Bestimmungskomponente (26) ausgelegt ist, um zu bestimmen, welche aktuell laufenden Programme, die nicht im Verzeichnis (14) der wesentlichen Programme enthalten sind, zum Wiederanlaufen gebracht werden können, ohne auf das entfernbare Speichermedium (2) zuzugreifen, die Hinzufügungskomponente (24) ausgelegt ist, ein Verzeichnis zu erzeugen, das die Programme enthält, die zum Wiederanlauf gebracht werden können, und die Beendigungskomponente (16) ausgelegt ist, um die Programme, die im Verzeichnis der Programme, die zum Wiederanlaufen gebracht werden können, enthalten sind, zum Wiederanlaufen zu bringen.

18. Vorrichtung nach einem der Ansprüche 15 bis 17, wobei die Schnittstellenkomponente (4) weiter eine Triggerkomponente (18) umfasst, die ausgelegt ist, um ein Signal zu erzeugen, wenn sich der Status der Schnittstellenkomponente (4) ändert.

19. Vorrichtung nach Anspruch 18, wobei das Signal angibt, dass ein entfernbares Speichermedium (2) mit der Schnittstelle (4) verbunden worden ist.

20. Vorrichtung nach Anspruch 18, wobei das Signal angibt, dass ein entfernbares Speichermedium (2) von der Schnittstelle (4) getrennt worden ist.

21. Vorrichtung nach einem der Ansprüche 15 bis 20, wobei die Schnittstellenkomponente (4) eine Statusanzeige (22) umfasst, die ausgelegt ist, um Lese- oder Schreibzugriffe auf das entfernbare Speichermedium (2) anzugeben.

22. Vorrichtung nach einem der Ansprüche 15 bis 21, wobei das mobile elektronische Endgerät (20) ein Mobiltelefon ist.

23. Vorrichtung nach einem der Ansprüche 15 bis 22, wobei das mobile elektronische Endgerät (20) eine Spielekonsole ist.

## Revendications

1. Procédé pour assurer l'état de fonctionnement d'un dispositif de terminal électronique mobile (20), ledit dispositif de terminal électronique mobile (20) comprenant une interface (4) pour se connecter à un support de stockage amovible (2) et contenant un répertoire (14) de programmes essentiels au fonctionnement dudit dispositif de terminal électronique mobile (20), le procédé comprenant les étapes consistant à :
- détecter si le statut de ladite interface a changé (102) ;
- comparer (108) les programmes en cours d'exécution sur ledit dispositif de terminal électronique mobile (20) aux programmes contenus dans ledit répertoire (14) desdits programmes essentiels ; et
- terminer (110) tous les programmes en cours d'exécution qui ne sont pas contenus dans ledit répertoire (14) desdits programmes essentiels.

2. Procédé selon la revendication 1, dans lequel un changement de statut de ladite interface (4) indique qu'un support de stockage amovible (2) a été connecté à ladite interface (4).

3. Procédé selon la revendication 1, dans lequel un changement de statut de ladite interface (4) indique qu'un support de stockage amovible (2) a été déconnecté de ladite interface (4).

4. Procédé selon la revendication 3, dans lequel l'étape consistant à détecter si le statut de ladite interface (4) a changé est suivie des étapes consistant à :
- déterminer (104) les programmes en cours d'exécution sur ledit dispositif de terminal électronique mobile (20) qui sont indépendants des données stockées sur ledit support de stockage amovible (2) ; et
- ajouter (106) lesdits programmes indépendants au dit répertoire (14) desdits programmes essentiels.

5. Procédé selon la revendication 3 ou 4, dans lequel ledit dispositif de terminal électronique mobile (20) contient un répertoire de redémarrage, et les étapes de la revendication 4 sont suivies des étapes consistant à :
- déterminer lesquels desdits programmes qui ne sont pas contenus dans ledit répertoire (14) de programmes essentiels peuvent être redémarrés sans accéder au dit support de stockage amovible (2) ; et
- ajouter lesdits programmes pouvant être redémarrés au dit répertoire de redémarrage.

6. Procédé selon la revendication 5, comprenant en outre l'étape consistant à :
- redémarrer tous les programmes qui se trouvent dans ledit répertoire de redémarrage.

7. Procédé selon l'une quelconque des revendications précédentes, dans lequel ladite interface (4) est interrogée pour détecter si le statut de ladite interface (4) a changé.

8. Procédé selon la revendication 7, dans lequel ladite interrogation est constamment répétée toutes les n secondes.

9. Procédé selon la revendication 7 ou 8, dans lequel ladite interrogation est mise en pause lorsque le dispositif de terminal électronique mobile (20) est dans un état d'économie d'énergie.

10. Procédé selon l'une quelconque des revendications précédentes,
dans lequel un signal est reçu pour détecter si le statut de ladite interface (4) a changé.

11. Outil logiciel comprenant un moyen de code de programme stocké sur un support lisible par ordinateur pour effectuer le procédé selon l'une quelconque des revendications précédentes lorsque ledit outil logiciel est exécuté sur un ordinateur ou un dispositif de réseau.

12. Produit de programme informatique comprenant un moyen de code de programme stocké sur un support lisible par ordinateur pour effectuer le procédé selon l'une quelconque des revendications précédentes lorsque ledit produit de programme est exécuté sur un ordinateur ou un dispositif de réseau.

13. Produit de programme informatique comprenant un code de programme téléchargeable à partir d'un serveur pour effectuer le procédé selon l'une quelconque des revendications précédentes lorsque ledit produit de programme est exécuté sur un ordinateur ou un dispositif de réseau.

14. Signal de données d'ordinateur incorporé dans une onde porteuse et représentant un programme qui fait en sorte qu'un ordinateur effectue les étapes du procédé selon l'une quelconque des revendications précédentes.

15. Dispositif de terminal électronique mobile (20), comprenant :
- un composant d'interface (4) pour se connecter à un support de stockage amovible (2) ;
- un composant de traitement de données (6) ; et
- un composant de stockage (8),
dans lequel ledit composant de stockage (8) est apte à stocker des répertoires (14) de programmes, et ledit composant d'interface (4) est apte à permettre au dit composant de traitement de données (6) d'accéder au dit support de stockage amovible (2), **caractérisé en ce que**
ledit composant de stockage (8) comprend un répertoire (14) de programmes essentiels au fonctionnement dudit dispositif de terminal électronique mobile (20), et ledit composant de traitement de données (6) comprend un composant de détection (10), un composant de comparaison (12) et un composant de terminaison (16), dans lequel ledit composant de détection (10) est apte à détecter des changements de statut dudit composant d'interface (4), ledit composant de comparaison (12) est apte à comparer les programmes en cours d'exécution sur ledit dispositif de terminal électronique mobile (20) aux programmes contenus dans ledit répertoire (14) desdits programmes essentiels, et ledit composant de terminaison (16) est apte à terminer les programmes en cours d'exécution sur ledit dispositif de terminal électronique mobile (20) qui ne sont pas contenus dans ledit répertoire (14) desdits programmes essentiels.

16. Dispositif selon la revendication 15, comprenant en outre un composant de détermination (26) et un composant d'ajout (24), dans lequel ledit composant de détermination (26) est apte à déterminer les programmes qui sont indépendants de l'accès au dit support de stockage amovible (2), et ledit composant d'ajout (24) est apte à ajouter lesdits programmes indépendants au dit répertoire (14) desdits programmes essentiels.

17. Dispositif selon la revendication 16, dans lequel ledit composant de détermination (26) est apte à déterminer quels programmes en cours d'exécution qui ne sont pas contenus dans ledit répertoire (14) de programmes essentiels peuvent être redémarrés sans accéder au dit support de stockage amovible (2), ledit composant d'ajout (24) est apte à générer un répertoire comprenant lesdits programmes qui peuvent être redémarrés, et ledit composant de terminaison (16) est apte à redémarrer lesdits programmes contenus dans ledit répertoire de programmes qui peuvent être redémarrés.

18. Dispositif selon l'une quelconque des revendications 15 à 17, dans lequel ledit composant d'interface (4) comprend en outre un composant de déclenchement (18) apte à générer un signal lorsque le statut dudit composant d'interface (4) change.

19. Dispositif selon la revendication 18, dans lequel ledit signal indique qu'un support de stockage amovible (2) est connecté à ladite interface (4).

20. Dispositif selon la revendication 18, dans lequel ledit signal indique qu'un support de stockage amovible (2) est déconnecté de ladite interface (4).

21. Dispositif selon l'une quelconque des revendications 15 à 20, dans lequel ledit composant d'interface (4) comprend un indicateur de statut (22) apte à indiquer des accès de lecture ou d'écriture au dit support de stockage amovible (2).

22. Dispositif selon l'une quelconque des revendications 15 à 21, dans lequel ledit dispositif de terminal électronique mobile (20) est un téléphone mobile.

23. Dispositif selon l'une quelconque des revendications 15 à 22, dans lequel ledit dispositif de terminal électronique mobile (20) est une console de jeux.
